# EUROPEAN PATENT SPECIFICATION

(11) **EP 1 728 824 B1**
(45) Date of publication and mention of the grant of the patent: **09.09.2009**
(21) Application number: 06252642.1
(22) Date of filing: 19.05.2006
(51) Int. Cl.: C08L 29/04, C08L 23/08, F16L 11/04

(54) **Evoh composite resin and refrigerant transporting hose**
EVOH-Verbundharz und Kühlmittelschlauch
Résine composite à base d'EVOH et tuyau pour réfrigérant

(30) Priority: 31.05.2005 JP 2005159674; 25.11.2005 JP 2005340546
(43) Date of publication of application: 06.12.2006
(73) Proprietor: Bridgestone Corporation, Tokyo 104-8340 (JP)
(72) Inventor: Tsunoda, Karsuhiko c/o Yokohama P. Bridgestone C., Yokohama-shi, Kanagawa (JP)
(74) Representative: Whalley, Kevin

(56) References cited:
- EP-A1- 0 703 279
- EP-A1- 0 814 126
- EP-A2- 1 176 168
- US-A- 5 160 475
- US-A- 5 223 571
- US-B1- 6 294 609

## Description

### Field of the Invention

The present invention relates to an EVOH composite resin having superior flexibility and gas barrier property that can be used as the innermost layer of refrigerant transporting hoses to impart gas barrier property (refrigerant impermeability), dynamic durability and flexibility to the refrigerant transporting hoses, and to a refrigerant transporting hose using the EVOH composite resin.

### Background of the Invention

Refrigerant transporting hoses used as tubing for automotive air conditioners are mainly intended for high-pressure lines or low-pressure lines. The high-pressure line feeds the condenser at a high pressure with a refrigerant that has been compressed by a compressor to be in a high-temperature gas-liquid mixed state. The low-pressure line returns the low-pressure low-temperature refrigerant that has been evaporated by an evaporator to the compressor.

The refrigerant transporting hose is required to have a gas barrier property sufficient to certainly prevent the leakage of the refrigerant (Freon), such flexibility as the hose can be routed in a tight space, and other properties for ensuring the durability, such as ageing resistance, impact resistance, and mechanical strength. Among these properties, particularly important is gas barrier property. Since leakage from high pressure lines is prominent due to their structures, a high gas barrier property is required.

In order to ensure gas barrier property and flexibility, known refrigerant transporting hoses have a multilayer structure including an innermost layer acting as a gas barrier layer made of a composite resin containing a polyamide resin, such as polyamide 6 (nylon 6), and an elastomer acting as a softening agent, and a rubber layer coating the periphery of the gas barrier layer. Unfortunately, the gas barrier property of the elastomer is inferior to that of the polyamide. Accordingly, the addition of the elastomer enhances the flexibility of the innermost layer, but degrades its gas barrier property.

The present inventors have proposed a refrigerant transporting hose having a superior gas barrier property and flexibility (Japanese Unexamined Patent Application Publication No. 2000-120944) to overcome this disadvantage. The refrigerant transporting hose includes an innermost layer containing 58 to 72 parts by weight of polyamide 6 and 42 to 28 parts by weight of an elastomer. The innermost layer has a sea-island structure in which the elastomer is dispersed to form dispersed phases in a matrix phase defined by the polyamide 6, with part of the polyamide 6 dispersed in a dotted manner in the elastomer dispersed phases.

In this innermost resin layer of the refrigerant transporting hose, the polyamide 6 is dispersed in the dispersed elastomer phases, and consequently increases the apparent volume fraction of the dispersed elastomer phases by the volume of the dispersed polyamide 6 phases. The increase in apparent volume fraction of the dispersed elastomer phases, as well as the increase in elastomer content, produces the effect of increasing flexibility; hence, the flexibility can be enhanced while the actual elastomer content is held down. Consequently, the reduction of gas barrier property resulting from the addition of the elastomer is prevented.

Environmental problems are of concern in recent years, and the global warming potential of chlorofluorocarbon gas R-134a, which is used as the refrigerant of automotive air conditioners, is becoming perceived as a problem. The currently used chlorofluorocarbon R-134a has an ozone depletion potential of zero, but a high global warming potential of nearly 1500, and it is therefore required that its leakage be greatly reduced.

In view of such circumstances, EU adopted a new regulation plan for fluorinated gas emission control in the middle of 2003, and automotive OE companies have had a great interest in greatly reducing the leakage of the refrigerant. The polyamide-based resin layer as disclosed in the above-cited Japanese Unexamined Patent Application Publication No. 2000-120944 does not have gas barrier property sufficient for the EU regulation and is therefore required to be drastically reviewed.

Then, the inventors filed a Japanese patent application (Japanese Patent Application No. 2004-104947) proposing a refrigerant transporting hose having high gas barrier property and, in addition, high dynamic durability, such as impulse resistance, and flexibility. This refrigerant transporting hose includes a resin layer formed of a polyamide (hereinafter may be referred to as "polyamide MX") containing meta-xylenediamine as a constitutional unit.

While polyamide MX is superior in gas barrier property, it is inherently hard and is accordingly insufficient, for example, in impulse resistance after long-time heat aging, which is a necessary property for hoses, and in durability against vibration durability test. In order to overcome this advantage, Japanese Patent Application No. 2004-104947 has proposed a hose including a polyamide MX gas barrier layer having a high gas barrier property and, in addition, an innermost resin layer for enhancing the flexibility and dynamic durability.

Japanese Patent Application No. 2004-104947, however, requires a multilayer structure including the polyamide MX layer for gas barrier property and the resin layer for flexibility and durability. Such a multilayer structure disadvantageously requires sophisticated manufacturing techniques and expensive equipment for multilayer extrusion.

Then, the inventors filed a Japanese patent application (Japanese Patent Application No. 2004-299025) proposing a polyamide-based composite resin containing polyamide MX and polyolefin, having not only a high gas barrier property, but also high flexibility and durability. This composite resin can provide a gas barrier layer in a refrigerant transporting hose without forming a multilayer structure.

The EVOH composite resin of Japanese Patent Application No. 2004-299025, which is a polymer alloy prepared by adding a polyolefin as a softening agent to polyamide MX, can have high barrier property, flexibility and durability.

Although the polyamide MX-based composite resin proposed in Japanese Patent Application No. 2004-299025 has high gas barrier property, flexibility and durability, it is desired that these properties be further enhanced. In particular, it is desired in view of ensuring flexibility that the polyamide MX-based composite resin layer have sufficient gas barrier property and durability while its thickness is reduced. This is because the polyamide MX-based composite resin is inferior in flexibility to conventional polyamide.

### Summary of the Invention

In view of the above-described circumstances, the object of the present invention is to provide an EVOH composite resin as defined in claim 1, having significantly superior gas barrier property and flexibility and being capable of achieving refrigerant transporting hoses exhibiting high impulse resistance after long-time heat ageing and high durabilities such as those against vibration durability test after impulse test and against dynamic durability test after heat aging, and to provide a refrigerant transporting hose using the EVOH composite resin. The EVOH composite resin of the present invention contains an ethylene-vinyl alcohol copolymer and an elastomer.

The present inventors have conducted intensive research to overcome the above-described challenges. Specifically, the inventors have focused on copolymers of ethylene and vinyl alcohol with high gas barrier property, and further studied to impart flexibility to the copolymer while the gas barrier property is minimized. As a result, it has been found that the use of a polymer alloy prepared by adding an elastomer as an softening agent to an ethylene-vinyl alcohol copolymer (EVOH) can significantly enhance the flexibility while preventing the decrease of gas barrier property, and that the resulting refrigerant transporting hoses can exhibit satisfactory impulse resistance after long-time heat ageing and satisfactory durabilities against vibration durability test after impulse test and against dynamic durability test after heat ageing.
The present invention has been accomplished on the basis of these findings.

According to the present invention, an EVOH composite resin superior in gas barrier property, flexibility and durability can be achieved by adding an elastomer as a softening agent to an ethylene-vinyl alcohol copolymer to prepare a polymer alloy. Accordingly, a refrigerant transporting hose having a gas barrier layer formed of the EVOH composite resin has significantly superior gas barrier property and flexibility, and high impulse resistance after long-time heat ageing and high durabilities against vibration durability test after impulse test and against dynamic durability test after heat ageing.

### Brief Description of the Drawings

Fig. 1 is a perspective view of a refrigerant transporting hose according to an embodiment of the present invention.
Fig. 2 is a perspective view of a refrigerant transporting hose according to another embodiment of the present invention.
Figs. 3a to 3d are each a perspective view of a resin layer of a refrigerant transporting hose according to other embodiments.

### Disclosure of the Invention

Embodiments of the EVOH composite resin and the refrigerant transporting hose of the present invention will now be described in detail.

First, the EVOH composite resin of the present invention will be described.

The EVOH composite resin of the present invention is a polymer alloy prepared by adding an elastomer as a softening agent to an ethylene-vinyl alcohol copolymer.

As for the ethylene/vinyl alcohol content ratio, as the ethylene content is increased and the vinyl alcohol content is reduced, the ethylene-vinyl alcohol copolymer has characteristics more similar to those of polyethylene; hence while the flexibility is enhanced, the melting point decreases and the gas barrier property deteriorates. In contrast, an ethylene-vinyl alcohol copolymer having a reduced ethylene content and an increased vinyl alcohol content exhibits a degraded flexibility, but a higher melting point and a greatly enhanced gas barrier property. Accordingly, the ethylene content is preferably about 28 to 40 mol%.

The ethylene-vinyl alcohol copolymer may be composed of a single type copolymer, or at least two types of copolymer having different molecular weights, compositional ratios, or the like.

Exemplary elastomers include ethylene-butene copolymer, EPR (ethylene-propylene copolymer), modified ethylene-butene copolymer, EEA (ethylene-ethyl acrylate copolymer), modified EEA, modified EPR, modified EPDM (ethylene-propylene-diene terpolymer), ionomer, α-olefin copolymer, modified IR (isoprene rubber), modified SEBS (styrene-ethylene-butylene-styrene copolymer), halogenated isobutylene-paramethylstyrene copolymer, ethylene-acrylic acid modified forms, ethylene-vinyl acetate copolymer and its acid-modified forms, and mixtures mainly containing these polymers. These elastomers may be used singly or in combination.

Preferably, the elastomer is modified with an acid anhydride such as maleic anhydride. Such an elastomer can form a fine alloy structure containing an ethylene-vinyl alcohol copolymer as the base polymer.

An excessively low content of elastomer in the EVOH composite resin of the present invention cannot sufficiently enhance the flexibility and durability. In contrast, an excessively high content of elastomer degrades the gas barrier property. Accordingly, the elastomer content in the EVOH composite resin is 10% to 45% by weight, and particularly 10% to 35% by weight. An excessively high content of elastomer in the EVOH composite resin undesirably reverses the matrix phase and the dispersed phase in the sea-island structure and, consequently, significantly degrades the gas barrier property.

The EVOH composite contains an acid-modified elastomer. The elastomer advantageously requires low specific energy or no sophisticated techniques when the composite is keaded (subjected to dispersion). However, if its content is high, the resin can gelate and consequently come to a rough surface or other defective appearances (fisheyes) during extrusion. In use of a modified elastomer as the elastomer, it is preferable that the modified elastomer content in the EVOH composite resin be 20% by weight or less, and for example, 5% to 20% by weight.
Particularly preferably, in the present invention, the acid-modified elastomer accounts for 40% to 100% of the entire elastomer in the EVOH composite resin by weight.

Ethylene-vinyl alcohol copolymers are inherently not compatible with elastomers, such as the above-listed ethylene-based elastomers. The present invention accomplishes the object by bringing such a non-compatible system into a compatible state, or a well-dispersed state. For establishing the compatible state, it is important that at least part of the elastomer is acid-modified with, for example, maleic anhydride, and it is preferable that the average acid value (acid modification degree) of the entirety of the elastomers used for obtaining a well-dispersed state be 3.0 mg-CH₃ONa/g or more.

The higher the acid value of the elastomer, the better the dispersed state. However, as the acid value is increased, the viscosity of the resulting EVOH composite resin is increased and, thus, its formability is degraded. In order to alleviate the increase of the viscosity resulting from the increase of the acid value, the acid value of the elastomer is preferably lower within a range capable of ensuring a well-dispersed state. Accordingly, the average acid value of the entire elastomer is preferably 7.5 mg-CH₃ONa/g or less.

The average acid value is reduced by mixing the acid-modified elastomer with an unmodified elastomer. However, if the acid value of the modified elastomer used as part of the elastomer is increased while the average acid value of the entire elastomer is maintained, a foreign gel is locally formed by, probably, an excess reaction during extrusion, in spite of a reduced average acid value. Accordingly, the acid value of the modified elastomer is preferably 15.0 mg-CH₃ONa/g or less.

For example, suppose there are two types of mixed elastomers A and B. Mixed elastomer A contains an acid-modified elastomer with an acid value of 30 mg-CH₃ONa/g and an unmodified elastomer in a weight ratio of 17:83, and the average acid value in the entire elastomer is about 5 (= 30 × 17/100). Mixed elastomer B contains an acid-modified elastomer with an acid value of 10 and an unmodified elastomer in a weight ratio of 50:50, and the average acid value in the entire elastomer is 5. EVOH composite resins prepared using these elastomers have large differences from each other in formability, in spite of having the same apparent viscosity and dispersed particle size. While mixed elastomer A contains foreign gels here and there, mixed elastomer B exhibits good stability. Thus, the acid-modified elastomer has an acid value of 15.0 mg-CH₃ONa/g or less. The lower limit of the acid value of the modified elastomer is equal to the lower limit of the average acid value of the elastomer, that is, 3 mg-CH₃ONa/g.

Addition of the elastomer to the ethylene-vinyl alcohol copolymer can enhance the flexibility and the durability, but inevitably reduces the gas barrier property. However, by forming a fine alloy structure constituted of the ethylene-vinyl alcohol copolymer and the elastomer, particularly in a state where the elastomer is dispersed in a matrix phase defined by the ethylene-vinyl alcohol copolymer with part of the ethylene-vinyl alcohol copolymer dispersed in a dotted manner in the elastomer dispersed phases, the degradation of the gas barrier property, which results from the addition of the elastomer, can be advantageously prevented.

In particular, it is preferable that the ratio (hereinafter referred to as the dotted dispersion ratio) of the ethylene-vinyl alcohol copolymer phases dispersed in a dotted manner in the elastomer dispersed phases to the ethylene-vinyl alcohol copolymer (the total of the ethylene-vinyl alcohol copolymer defining the matrix phase and the ethylene-vinyl alcohol copolymer phases dispersed in the elastomer dispersed phases) be about 5% to 40% by weight. A dotted dispersion ratio of less than 5% by weight does not sufficiently produce the effect resulting from dispersing the ethylene-vinyl alcohol copolymer phases in a dotted manner in the elastomer dispersed phases. In contrast, a dotted dispersion ratio of more than 40% by weight may result in an excessively small amount of ethylene-vinyl alcohol copolymer matrix phase, and consequently degrade the gas barrier property.

Preferably, the size of the elastomer dispersed phases is about 0.4 to 1.5 µm and the size of the ethylene-vinyl alcohol copolymer phases in the elastomer dispersed phases is about 0.05 to 0.5 µm.

The EVOH composite resin of the present invention may contain resin constituents other than the ethylene-vinyl alcohol copolymer. In this instance, in order to ensure the gas barrier property, the ethylene-vinyl alcohol copolymer preferably accounts for 70% by weight or more of the total resin constituent in the EVOH composite resin.

Among the resin constituents other than the ethylene-vinyl alcohol copolymer are polyamide resins. These resins may be used in singly or in combination.

The EVOH composite resin may contain additives, such as an antioxidant or an oxidation-deterioration preventing agent, if necessary.

In view of the formability of the EVOH composite resin, and particularly of the extrusion stability in a thin film, the fluidity of the EVOH composite resin is important. Preferably, the MFR value (hereinafter referred to as "MFR (250°C/5005 g)") measured at 250°C and a load of 5005g in accordance with ASTM D 1238 is 3.0 or more. The upper limit of the MFR (250°C/5005 g) of the EVOH composite resin is not particularly restricted, but generally 20 or less.

The EVOH composite resin of the present invention, particularly the EVOH composite resin having the above-described morphology in sea-island structure, can be produced by the following process (1) or (2):
(1) Process of kneading part of an ethylene-vinyl alcohol copolymer and an elastomer in a predetermined proportion to prepare a masterbatch, and kneading the masterbatch with the rest of the ethylene-vinyl alcohol copolymer.
(2) Process of melt-kneading a mixture of an ethylene-vinyl alcohol copolymer and an elastomer by high shearing.

The refrigerant transporting hose of the present invention including a layer formed of the EVOH composite resin of the present invention will now be described with reference to drawings.

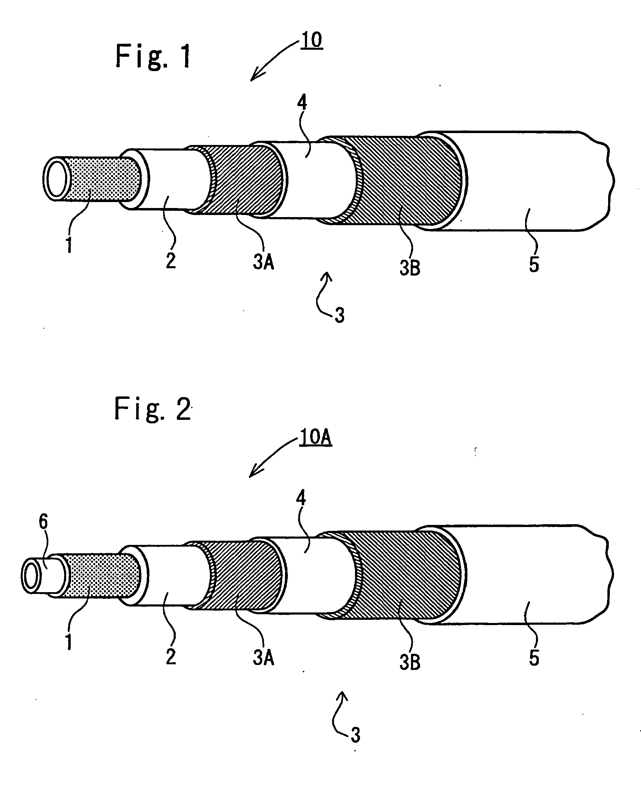

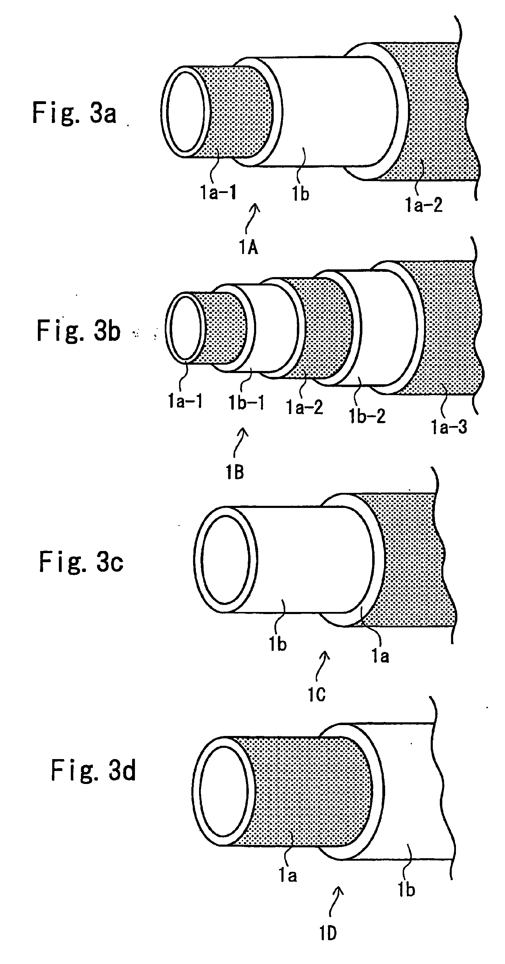

Figs. 1 and 2 are perspective views of refrigerant transporting hoses according to embodiments of the present invention. Figs. 3a to 3d are perspective views of resin layers of refrigerant transporting hoses according to other embodiments of the present invention.

The refrigerant transporting hose 10 shown in Fig. 1 includes a reinforcing layer 3 between an inner rubber layer 2 and an external rubber 5, and a resin layer 1 along the inner wall of the inner rubber layer 2. The reinforcing layer 3 is composed of a first reinforcing layer 3A formed by winding a reinforcing thread in a spiral manner and a second reinforcing layer 3B formed by winding a reinforcing thread in a spiral manner in the direction opposite to the spiral of the first reinforcing layer 3A with an intermediate rubber layer 4 in between. An adhesive layer may be additionally provided between the resin layer 1 and the inner rubber layer 2, if necessary.

The refrigerant transporting hose 10A shown in Fig. 2 further includes an innermost rubber layer 6 as the innermost layer along the inner wall of the resin layer 1 of the refrigerant transporting hose 10 shown in Fig. 1. An adhesive layer may be additionally provided between the innermost rubber layer 6 and the resin layer 1, if necessary.

The resin layer 1 is formed of the above-described EVOH composite resin of the present invention. The resin layer 1 preferably has a thickness as large as possible from the viewpoint of the gas barrier property and durability of the hose. However, an excessively large thickness degrades the flexibility of the hose. Preferably, the thickness of the resin layer 1 is 20 to 300 µm, and particularly 50 to 100 µm.

Even if the resin layer 1 formed of the EVOH composite resin of the present invention has a single-layer structure, it can serve as the innermost layer or the layer disposed around the innermost rubber layer, of the refrigerant transporting hose, and thus can help to provide refrigerant transporting hoses exhibiting high impulse resistance after long-time heat ageing, high durabilities against vibration durability test after impulse test and against dynamic durability test after heat ageing, and high gas barrier property. Any refrigerant transporting hose using the EVOH composite resin of the present invention can easily be manufactured without coextrusion for forming a multilayer structure.

However, the resin layer of the refrigerant transporting hose of the present invention does not necessarily have a single-layer structure as shown in Figs. 1 and 2, and may be formed as any one of the multilayer resin layers 1A to 1D as shown in Figs. 3a to 3d unless the total thickness of the hose is excessively increased to degrade the flexibility, or unless the cost or the weight is increased. Figs. 3a to 3d show that the multilayer resin layers 1A and 1B are each used as an alternative to the resin layer 1 of the refrigerant transporting hose 10 shown in Fig. 1. The other constituent layers are the same as in Fig. 1. Each of the multilayer resin layers 1A and 1B is wrapped with the inner rubber layer 2, the intermediate rubber layer 4 and the external rubber 5 in the same manner as in Fig. 1, or provided with the innermost rubber layer 6 in the same manner as in Fig. 2.

The multilayer resin layer 1A shown in Fig. 3a has an alternate three-layer structure composed of a first resin layer 1a-1, a second resin layer 1b and another first resin layer 1a-2 in that order from the inside. The multilayer resin layer 1B shown in Fig. 3b has an alternate five-layer structure composed of a first resin layer 1a-1, a second resin layer 1b-1, another first resin layer 1a-2, another second resin layer 1b-2 and still another first resin layer 1a-3 in that order from the inside. The multilayer resin layer 1C shown in Fig. 3c has a double-layer structure composed of a second resin layer 1b and a first resin layer 1a in that order from the inside. The multilayer resin layer 1D shown in Fig. 3d has a double-layer structure composed of the first resin layer 1 and the second resin layer 1b in that order from the inside.

The first resin layers 1a, 1a-1, 1a-2 and 1a-3 are mainly intended to enhance the durability and the flexibility. Each first resin layer is formed of a polyamide 6-elastomer composite resin preferably containing 58 to 72 parts by weight of polyamide 6 and 42 to 28 parts by weight of elastomer (wherein the total of the polyamide 6 and the elastomer comes to 100 parts by weight). The elastomer is dispersed in a matrix phase defined by the polyamide 6 to form dispersed phases, and part of the polyamide 6 is dispersed in a dotted manner in the elastomer dispersed phases. If the polyamide 6 content in the polyamide 6-elastomer composite resin is less than 58 parts by weight, the gas barrier property is degraded even if the morphology has the above-described specific sea-island structure. In contrast, if the polyamide 6 content is more than 72 parts by weight, the flexibility is degraded even if the morphology has the above-described specific sea-island structure.

Polyamide 6-elastomer composite resins whose morphologies have no specific sea-island structure cannot lead to high gas barrier property and flexibility even if they have the above-described polyamide 6-elastomer composition. In order to optimize both the gas barrier property and the flexibility, it is, in particular, preferable that the ratio (hereinafter referred to as dotted dispersion ratio) of the polyamide 6 phases dispersed in a dotted manner in the elastomer dispersed phase to the polyamide 6 (the total of the polyamide 6 defining the matrix phase and the polyamide 6 phases dispersed in a dotted manner in the elastomer dispersed phases) be about 2.5% to 30% by weight. A dotted dispersion ratio of less than 2.5% by weight does not sufficiently produce the effect resulting from dispersing the polyamide 6 phases in a dotted manner in the elastomer dispersed phases. In contrast, a doted dispersion ratio of more than 30% by weight may result in an excessively small amount of polyamide 6 matrix phase and consequently degrade the gas barrier property.

Preferably, the size of the elastomer dispersed phases is about 0.4 to 1.5 microns and the size of the polyamide 6 phases in the elastomer dispersed phases is about 0.05 to 0.5 microns.

Exemplary elastomers include ethylene-butene copolymer, modified ethylene-butene copolymer, EEA (ethylene-ethyl acrylate copolymer), modified EEA, modified EPR (ethylene-propylene copolymer), modified EPDM (ethylene-propylene-diene terpolymer), ionomer, α-olefin copolymer, modified IR (isoprene rubber), modified SEBS (styrene-ethylene-butylene-styrene copolymer), halogenated isobutylene-paramethylstyrene copolymer, ethylene-acrylic acid-modified forms, ethylene-vinyl acetate copolymer and its acid-modified forms, and mixtures mainly containing these polymers. These elastomers may be used singly or in combination.

The polyamide 6-elastomer composite resin may contain additives, such as an antioxidant or an oxidation deterioration preventing agent, if necessary.

The morphology having the above-described specific sea-island structure can be produced in the polyamide 6-elastomer composite resin by:
(1) Process of kneading polyamide 6 and an elastomer in a predetermined proportion to prepare a masterbatch, and further kneading the masterbatch with polyamide 6.
(2) Process of melt-kneading a mixture of polyamide 6 and an elastomer by high shearing.

The second resin layers 1b, 1b-1 and 1b-2 are mainly intended to enhance the gas barrier property, and are formed of the EVOH composite resin of the present invention.

In the multilayer resin layer 1A having the three layer structure shown in Fig. 3a, preferably, the first resin layers 1a-1 and 1a-2 have a thickness of 30 to 200 µm, and the second resin layer 1b has a thickness of 20 to 80 µm. In the multilayer resin layer 1B having the five-layer structure shown in Fig. 3b, preferably, the first resin layers 1a-1 and 1a-3 each have a thickness of 20 to 100 µm, the first resin layer 1a-2 has a thickness of 20 to 100 µm, and the second resin layers 1b-1 and 1b-2 each have a thickness of 20 to 80 µm. In the multilayer resin layer 1C having the double-layer structure shown in Fig. 3c, preferably, the second resin layer 1b has a thickness of 30 to 200 µm and the first resin layer 1a has a thickness of 20 to 80 µm. In the multilayer resin layer 1D having the double-layer structure shown in Fig. 3d, preferably, the first resin layer 1a has a thickness of 20 to 80 µm and the second resin layer 1b has a thickness of 30 to 200 µm.

The multilayer resin layer may have a four-layer structure: first resin layer/second resin layer/first resin layer/second resin layer.

Each of the multilayer resin layers 1A to 1D can be easily formed in one piece by coextruding those resin layers. In this instance, since the polyamide and the ethylene-vinyl alcohol copolymer are relatively compatible with each other, the first resin layer and the second resin layer can tightly adhere to each other by coextrusion. It is unnecessary to apply an additional treatment for adhesion between these layers.

The other components of the refrigerant transporting hose can have the same structures as those of the conventional refrigerant transporting hose without particular limitation.

For example, the inner rubber layer 2 and the external rubber 5 of the refrigerant transporting hoses 10 and 10A shown in Figs. 1 and 2 are generally made of butyl rubber (IIR), chlorinated butyl rubber (Cl-IIR), chlorinated polyethylene, chlorosulfonated polyethylene, brominated butyl rubber (Br-IIR), isobutylene-bromoparamethylstyrene copolymer, EPR (ethylene-propylene copolymer), EPDM (ethylene-propylene-diene terpolymer), NBR (acrylonitrile butadiene rubber), CR (chloroprene rubber), hydrogenated NBR, acrylic rubber, a mixture of at least two of these rubbers, or a mixture of these rubbers as the principal constituent with a polymer. Preferably, butyl rubber or EPDM rubber is used. These rubbers can be mixed with a conventionally used filler, processing material, antioxidant, vulcanizing agent, vulcanization accelerator, or the like.

The inner rubber layer 2 and the external rubber 5 may be formed of the same rubber or different rubbers.

The intermediate rubber layer 4 can be formed of any rubber adherent to the inner rubber layer 2 and the external rubber 5, without particular limitation.

The reinforcing thread is also not particularly limited as long as it is generally used. In general, the reinforcing thread is made of polyester, wholly aromatic polyester, nylon, vinylon, rayon, aramid, polyacrylate or polyethylene naphthalate, or may be a composite strand of these materials.

Preferably, the inner rubber layer 2 has a thickness of about 0.8 to 4 mm from the viewpoint of flexibility. Preferably, the intermediate rubber layer 4 has a thickness of about 0.5 to 5 mm and the external rubber layer 5 has a thickness of about 1 to 2 mm.

In the refrigerant transporting hose 10A shown in Fig. 2, preferably, the innermost rubber layer 6 is made of IIR, chlorinated IIR, brominated IIR, CR, NBR, hydrogenated NBR, acrylic rubber, ethylene-acrylic rubber, or any other rubber, and has a thickness of about 0.3 to 1.5 mm.

The refrigerant transporting hose of the present invention can be produced in the common procedure by extruding layers at predetermined thicknesses around a mandrel, and then vulcanizing the layers at a temperature of 140 to 170°C for 30 to 120 minutes.

### [ Examples]

The present invention will be further described using Examples, Comparative Examples and Referential Examples. However, the invention is not limited to the following examples unless being beyond its scope.

The inner rubber layer, the intermediate rubber layer and the external rubber layer used in the following Examples, Comparative Examples and Referential Examples have respective rubber compositions shown in the following Tables 1 to 3.

**[Table 1]**

| Inner rubber | |
|---|---|
| Constituent | Part(s) by weight |
| IIR | 100 |
| FEF carbon | 65 |
| Stearic acid | 1 |
| Aroma oil | 5 |
| Hydrozincite | 5 |
| Accelerator EZ *1 | 0.5 |
| Accelerator TT *2 | 1 |
| Sulfur | 1 |

| | |
|---|---|
| *1 EZ: ACCELE EZ (produced by Kawaguchi Chemical Industry) *2 TT: NOCCELER TT (produced by Ouchishinko Chemical Industrial) | |

**[ Table 2]**

| Intermediate rubber | |
|---|---|
| Constituent | Part(s) by weight |
| IIR | 50 |
| EPDM | 50 |
| FEF carbon | 75 |
| Calcium carbonate | 10 |
| Aroma oil | 15 |
| Hydrozincite | 5 |
| Accelerator EZ | 0.5 |
| Accelerator TT | 1 |
| Sulfur | 1 |

**[ Table 3]**

| External rubber | |
|---|---|
| Constituent | Part(s) by weight |
| EPDM | 100 |
| FEF carbon | 100 |
| Stearic acid | 1 |
| Paraffin oil | 70 |
| Hydrozincite | 5 |
| Accelerator DM *3 | 0.5 |
| Accelerator TT | 1 |
| Sulfur | 1 |

| | |
|---|---|
| *3 DM: NOCCELER DM (produced by Ouchishinko Chemical Industrial) | |

### Examples 1 to 5, Comparative Examples 1 to 3

Refrigerant transporting hoses having structures shown in Figs. 1 and 3a were produced using resin layers formed of the following materials in the following procedure.
Polyamide: 6 nylon "1022B" produced by Ube Industries
Ethylene-vinyl alcohol copolymer: "L-101B" produced by Kuraray
Polyamide MX: MX nylon "S6001" produced by Mitsubishi Gas Chemical
Polyolefin: α-olefin polymer "TAFMER A-1050" produced by Mitsui Chemicals
Acid-modified polyolefin: maleic acid-modified α-olefin polymer "TAFMER MH7010" produced by Mitsui Chemicals
EEA: "EVAFLEX EEA A709" produced by Du Pont-Mitsui
Modified EEA: "HPR AR201" produced by Du Pont-Mitsui

### <Production Process 1: Production of the refrigerant transporting hose shown in Fig. 1>

A resin layer 1 was formed of a resin composition shown in Table 4 to a thickness of 250 µm around a mandrel of 11 mm in diameter by extrusion, and then the inner rubber shown in Table 1 was extruded to a thickness of 1.6 mm. Subsequently, 22 polyester reinforcing threads of 1100 dtex/4, each twined at a ratio of 10 turns/10 cm were aligned and wound around the inner rubber layer in a spiral manner. The intermediate rubber shown in Table 2 was extruded to a thickness of 0.3 mm around the reinforcing layer, and 22 polyester reinforcing threads of 1100 dtex/4 twined at a ratio of 10 turns/10 cm were aligned and wound around the intermediate rubber layer in the reverse direction in a spiral manner. Subsequently, the external rubber shown in Table 3 was extruded to a thickness of 1.2 mm, followed by vulcanization at 150°C for 45 minutes. Refrigerant transporting hoses of 11 mm in inner diameter and 19 mm in outer diameter were thus produced.

### <Production Process 2: Production of the refrigerant transporting hose shown in Fig. 3a>

Refrigerant transporting hoses were produced in the same manner as in the above Production Process 1, except that the multilayer resin layer 1A shown in Fig. 3a composed of three layers having the following thicknesses and compositions were formed as the resin layer.
First resin layer 1a-1: the same resin composition as the resin layer of Comparative Example 1, 150 µm in thickness
Second resin layer 1b: resin compositions shown in Table 4, 50 µm in thickness
First resin layer 1a-2: the same resin composition as the resin layer of Comparative Example, 50 µm in thickness

### <Evaluation>

The resulting refrigerant transporting hoses were evaluated for flexibility, chlorofluorocarbon gas barrier property and impulse resistance by the below-describe methods. The results are shown in Table 4. Also, the appearance of the resin layer was observed during extrusion, and whether it was good or no good is shown in Table 4.

Each EVOH composite resin of the resin layer used in the Examples was in a state where the elastomer was dispersed in an ethylene-vinyl alcohol copolymer matrix phase to form dispersed phases having diameters of about 0.5 to 2.0 µm with part of the ethylene-vinyl alcohol copolymer dispersed in dots having diameters of about 0.04 to 0.45 µm in the elastomer dispersed phases. The dotted dispersion ratios measured from transmission electron micrographs are shown in Table 4.

### Flexibility:

Three-point flexural test was performed.
The indentation load was measured by pressing the center of the specimen set at a span of 200 mm between rollers at 500 mm/min with a load cell, and was represented by an index number with respect to the indentation load of Comparative Example 1 defined as 100. The lower this index number, the higher the flexibility.

### Chlorofluorocarbon gas barrier property:

The hose was filled with a predetermined amount of chlorofluorocarbon gas and allowed to stand in a thermostatic bath of 90°C. The decrease in weight was measured every 24 hours. After the rate of weight decrease per hour steadied, the leakage from the hose per meter per day was measured, and was represented by an index number with respect to the leakage in Comparative Example 1 defined as 100. The lower this index number, the higher the gas barrier property.

### Impulse resistance:

A cyclic pressure test was performed.
The hose was checked for fractures and whether the airtightness was ensured, by repeatedly applying a pressure of 0 to 3.3 MPa to the inner wall of the hose with PAG oil at a temperature of 0 to 140°C at 20 CPM. The values in the table represent the number of pressure application cycles (in ten thousands) performed until the airtightness was lost. The higher the value, the higher the impulse resistance.

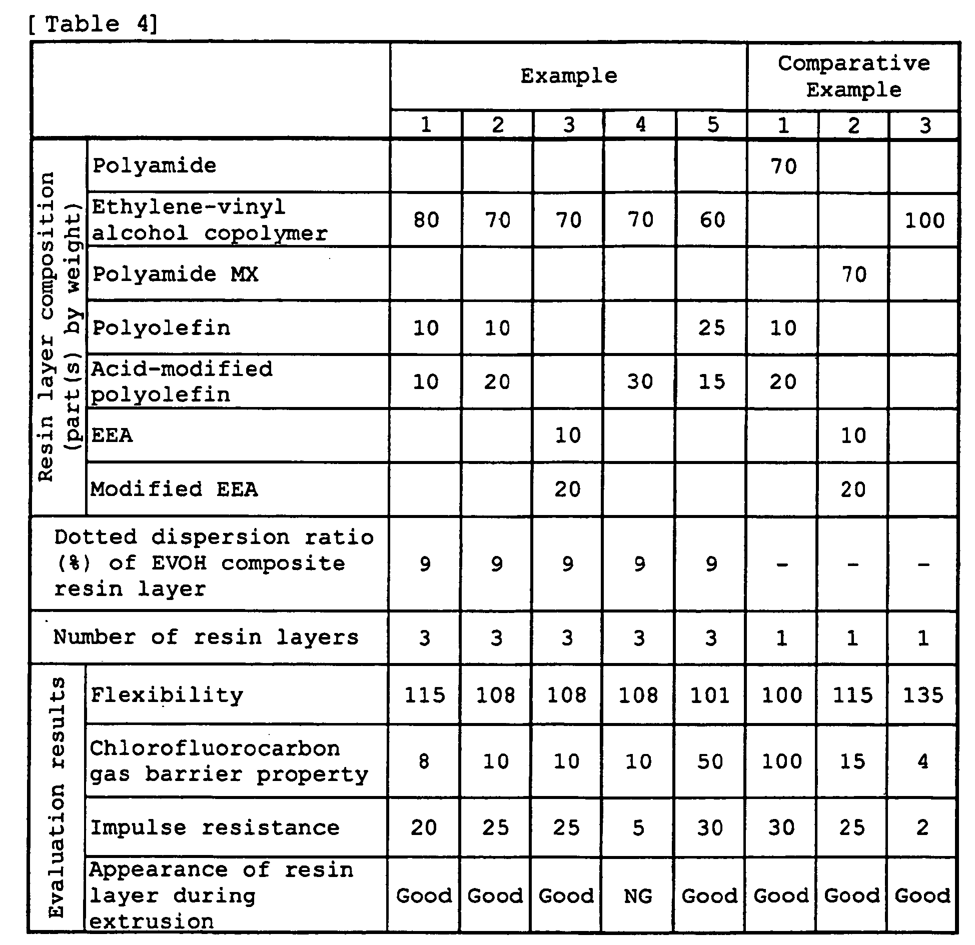

Table 4 shows that the EVOH composite resin of the present invention can achieve refrigerant transporting hoses having high flexibility, gas barrier property and durability.
On the other hand, Comparative Example 1, which used a polyamide/elastomer composite resin layer, exhibited high flexibility, but poor gas barrier property. Its durability was good. In Comparative Example 2, which used polyamide MX, the gas barrier property was enhanced, but not sufficient. In Comparative Example 3, which used only ethylene-vinyl alcohol copolymer but not elastomer, the flexibility and the durability were poor.
As for Example 4, in which the resin layer contained a large amount of acid-modified elastomer, the resin layer exhibited rather poor appearance during extrusion, but the flexibility and the gas barrier property were good. Also, a crack ran from a point of the poor appearance in an early stage, and thus the durability was inferior. In Example 5, the flexibility was good because of its high elastomer content, but the gas barrier property was rather poor. The durability was good depending on the flexibility.

### Examples 6 to 10, Comparative Examples 4 and 5, Referential Examples 1 to 5

Refrigerant transporting hoses having structures shown in Fig. 3a were produced in the above-described Production Process 2, using a second resin layer 1b (thickness: 50 µm) formed of the following materials in the proportions shown in Table 5 and first resin layers 1a-1 (thickness: 150 µm) and 1a-2 (thickness: 50 µm) having the same composition as the resin layer of Comparative Example 2.
Polyamide: 6 nylon "1022B" produced by Ube Industries
Ethylene-vinyl alcohol copolymer: "L-101B" produced by Kuraray
EPR: "EP961" produced by JSR
Modified EPR-1: "T7712" (acid value: 0.9) produced by JSR
Modified EPR-2: "T7741" (acid value: 4.7) produced by JSR
Modified EPR-3: "T7761" (acid value: 7.4) produced by JSR
Modified EPR-4: "KA8962" (acid value: 18.5) produced by Bayer

The resulting refrigerant transporting hoses were tested for flexibility, chlorofluorocarbon gas barrier property and impulse resistance in the same manner as in Example 1. The results are shown in Table 5. Also, the appearance of the resin layers was observed during extrusion, and whether it was good or no good is shown in Table 5. The extrudability was evaluated as follows: specimens in which the resin layers were able to be extruded in a thin film without variations in discharge pressure or in thickness in the longitudinal direction were determined to be good; specimens in which the resin layers were able to be extruded in a thin film with small variations in thickness in the longitudinal direction and the circumferential direction were determined to be middle; and specimens in which the resin layers were not able to be formed in a thin film were determined to be no good. The results are shown in Table 5.

The EVOH composite resin of the resin layer in each Example was in the sate where the elastomer was dispersed in the matrix phase defined by the ethylene-vinyl alcohol copolymer to form dispersed phases with part of the ethylene-vinyl alcohol copolymer dispersed in dots having diameters of about 0.04 to 0.45 µm in the elastomer dispersed phases. The dotted dispersion ratios measured from transmission electron micrographs and the average grain sizes of the elastomer dispersed phases are shown in Table 5.

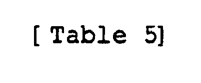

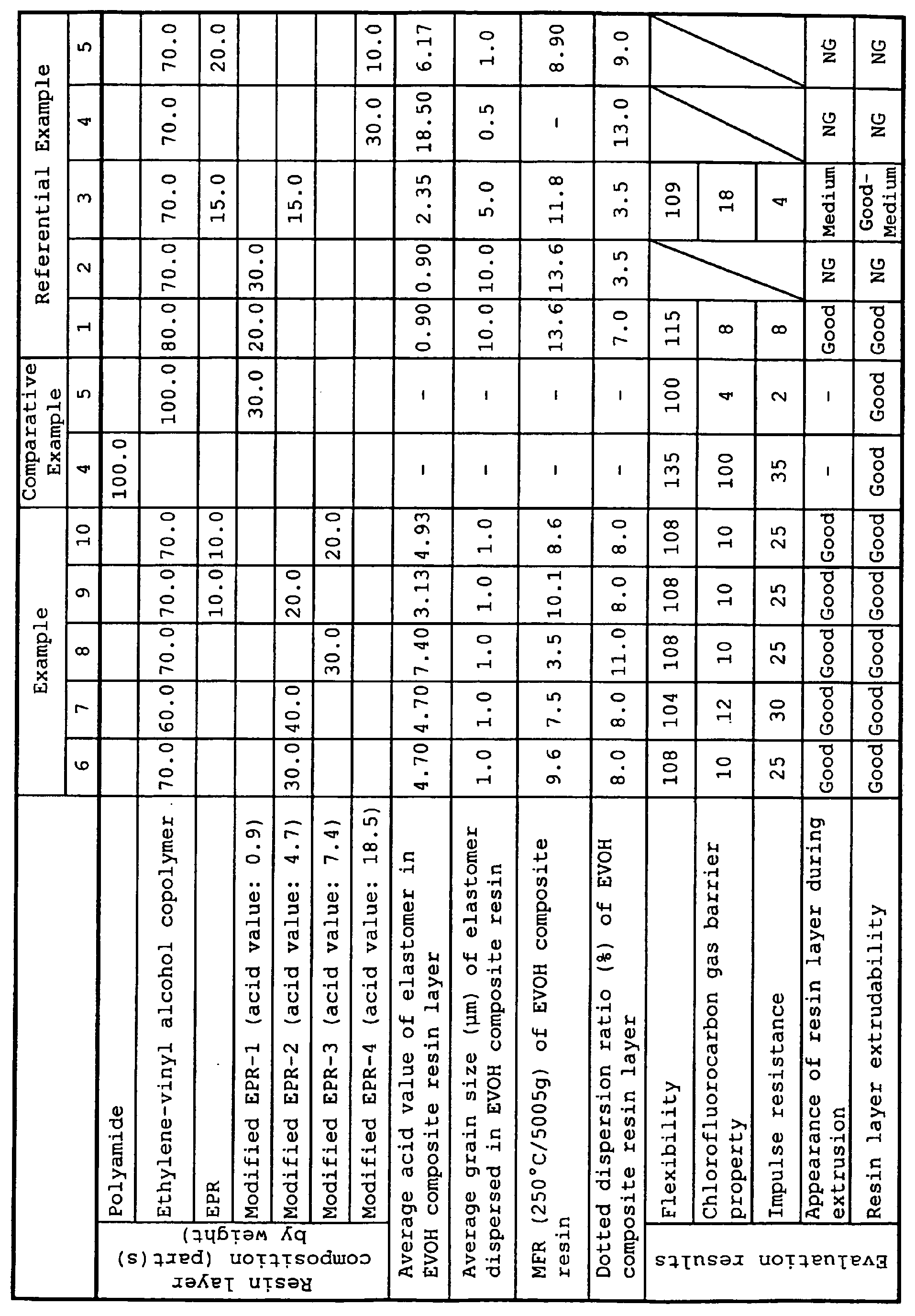

Table 5 shows that the average acid value of the elastomer and the acid value of the modified elastomer have optimum ranges.

## Claims

1. An EVOH composite resin comprising an ethylene-vinyl alcohol copolymer and an elastomer, wherein the elastomer content is in the range of 10% to 45% by weight; wherein the elastomer is an acid-modified elastomer, or a mixture of an acid-modified elastomer and an unmodified elastomer, wherein the acid-modified elastomer has an acid value in the range of 3 to 15.0 mg-CH₃ONa/g; and wherein the average acid value of the entire elastomer is in the range of 3 to 7.5 mg-CH₃ONa/g.

2. An EVOH composite resin as claimed in claim 1, wherein the EVOH composite resin contains 20% by weight or less of acid-modified elastomer.

3. An EVOH composite resin as claimed in claim 1 or 2, wherein the ethylene-vinyl alcohol copolymer forms a matrix phase, the elastomer forms dispersed phases, and part of the ethylene-vinyl alcohol copolymer is dispersed in a dotted manner in the elastomer dispersed phases.

4. An EVOH composite resin as claimed in any of claims 1 to 3, wherein the ethylene-vinyl alcohol copolymer contains 28 to 40 mol% of ethylene.

5. A refrigerant transporting hose comprising a layer formed of the EVOH composite resin as claimed in any of claims 1 to 4.

## Patentansprüche

1. EVOH-Verbundharz umfassend ein Ethylen-Vinylalkohol-Copolymer und ein Elastomer, wobei der Elastomergehalt im Bereich von 10 Gew.-% bis 45 Gew.-% liegt; wobei das Elastomer ein säuremodifiziertes Elastomer oder eine Mischung eines säuremodifizierten Elastomers und eines unmodifizierten Elastomers ist, wobei das säuremodifizierte Elastomer einen Säurewert im Bereich von 3 bis 15,0 mg-CH₃ONa/g aufweist; und wobei der durchschnittliche Säurewert des gesamten Elastomers im Bereich von 3 bis 7,5 mg-CH₃ONa/g liegt.

2. EVOH-Verbundharz nach Anspruch 1, wobei das EVOH-Verbundharz 20 Gew.-% oder weniger säuremodifiziertes Elastomer enthält.

3. EVOH-Verbundharz nach Anspruch 1 oder 2, wobei das Ethylen-Vinylalkohol-Copolymer eine Matrixphase bildet, das Elastomer dispergierte Phasen bildet und ein Teil des Ethylen-Vinylalkohol-Copolymers auf punktförmige Art und Weise in den dispergierten Elastomerphasen dispergiert ist.

4. EVOH-Verbundharz nach einem der Ansprüche 1 bis 3, wobei das Ethylen-Vinylalkohol-Copolymer 28 bis 40 Mol-% Ethylen enthält.

5. Kühlmittel transportierender Schlauch umfassend eine Schicht, die aus dem EVO-Verbundharz nach einem der Ansprüche 1 bis 4 gebildet ist.

## Revendications

1. Résine composite d'EVOH comprenant un copolymère d'éthylène-alcool de vinyle et un élastomère, dans laquelle la teneur en élastomère se situe dans la plage de 10% à 45% en poids ; dans laquelle l'élastomère est un élastomère modifié par un acide, ou un mélange d'un élastomère modifié par un acide et d'un élastomère non modifié, dans laquelle l'élastomère modifié par un acide a un indice d'acidité situé dans la plage de 3 à 15,0 mg de CH₃ONa/g ; et dans laquelle la valeur moyenne de l'indice d'acidité de l'élastomère entier est située dans la plage de 3 à 7,5 mg de CH₃ONa/g.

2. Résine composite d'EVOH tel que revendiqué selon la revendication 1, dans laquelle la résine composite d'EVOH contient 20 % en poids ou moins d'élastomère modifié par un acide.

3. Résine composite d'EVOH tel que revendiqué selon la revendication 1 ou la revendication 2, dans laquelle le copolymère d'éthylène-alcool de vinyle forme une phase de type matrice, l'élastomère forme des phases dispersées, et une partie du copolymère d'éthylène-alcool de vinyle est dispersée sous forme de points dans les phases dispersées d'élastomère.

4. Résine composite d'EVOH tel que revendiqué selon l'une quelconque des revendications 1 à 3, dans laquelle le copolymère d'éthylène-alcool de vinyle contient 28 à 40 % en mole d'éthylène.

5. Tuyau de transport d'un réfrigérant comprenant une couche formée de la résine composite d'EVOH tel que revendiqué selon l'une quelconque des revendications 1 à 4.
